# EUROPÄISCHE PATENTSCHRIFT

(11) **EP 3 061 560 B1**
(45) Veröffentlichungstag und Bekanntmachung des Hinweises auf die Patenterteilung: **10.06.2020**
(21) Anmeldenummer: 16157750.7
(22) Anmeldetag: 26.02.2016
(51) Int. Cl.: B23K 103/04, B23K 35/38

(54) **VERWENDUNG EINES SCHUTZGASES ZUM WIG-SCHWEISSEN FERRITISCHER STÄHLE**
USE OF A PROTECTIVE GAS FOR TIG WELDING OF FERRITIC STEELS
UTILISATION D'UN GAZ PROTECTEUR POUR LE SOUDAGE TIG DES ACIERS FERRITIQUES

(30) Priorität: 26.02.2015 DE 102015001754
(43) Veröffentlichungstag der Anmeldung: 31.08.2016
(73) Patentinhaber: Messer Group GmbH, 65812 Bad Soden (DE)
(72) Erfinder: Kampffmeyer, Dirk, 52441 Linnich (DE); Rockser, Mario, 17498 Hinrichshagen (DE); Hildebrandt, Bernd, 47918 Tönisvorst (DE)
(74) Vertreter: Münzel, Joachim R.

(56) Entgegenhaltungen:
- EP-A1- 0 502 318
- EP-A1- 0 949 038
- EP-A2- 1 321 218
- EP-A2- 1 491 278
- WO-A2-02/47859

## Beschreibung

Die Erfindung betrifft die Verwendung eines Schutzgases zum WIG-Schweißen ferritischer Stähle. Die Erfindung betrifft des Weiteren ein Verfahren zum WIG-Schweißen von ferritischen Stählen.

In der industriellen Anwendung sind zahlreichen Schweißgase für das Schweißen unter Schutz- bzw. Prozessgasen bekannt, wobei je nach der Zusammensetzung des zu schweißenden Werkstücks, der jeweiligen Schweißaufgabe und des jeweils angewandten Schweißverfahrens unterschiedliche Gase oder Gasgemische zum Einsatz kommen.

Beim Wolfram-Inertgas-Schweißen (WIG-Schweißen) werden als Schutzgase hauptsächlich die beiden Inertgase Argon oder Helium eingesetzt. Der Vorteil von Helium liegt in der höheren Energieeinbringung in den Grundwerkstoff, so dass hier - im Vergleich zum reinen Argon-Schutzgas - bei gleicher Stromstärke höhere Einbrandtiefen erzielt werden. Je nach Bedarf und Anwendung werden häufig Mischgase verwendet, die aus Argon und Helium bestehen. Eine Beimischung von Aktivgasen, wie Kohlendioxid, Sauerstoff oder Stickstoff wurde beim WIG-Schweißen bislang in der Regel vermieden, um die glühende Wolframelektrode keinen chemischen Reaktionen auszusetzen.

Um die Kosten des Schutzgases insbesondere bei höheren Einbrandtiefen zu reduzieren wäre es wünschenswert, das vergleichsweise teure Helium durch andere Gase zu ersetzen. Beispielsweise kann beim WIG-Schweißen von austenitischen Werkstoffen der Heliumanteil zumindest teilweise durch Wasserstoff oder andere Gase ersetzt werden. Wasserstoff führt, ähnlich wie Helium, zu einem im Vergleich zu reinem Argon verstärkten Einbrand und wirkt reduzierend auf die Oberfläche der Schweißnaht.

Beispielsweise ist aus der EP 0 826 456 A1 ein Schutzgasgemisch zur Verwendung beim WIG -Schweißen von austenitischen Werkstoffen bekannt, das sich durch einen Volumenanteil von 2,0 Vol.-% bis 3,7 Vol.-% Stickstoff; 0,5 Vol.-% bis 1,2 Vol.-% Wasserstoff, Rest Argon auszeichnet.

In der EP 1 707 295 A wird ein Schutzgasgemisch für das WIG-Schweißen von Metallen, insbesondere von hochlegierten Stählen, beschrieben, das überwiegend aus Argon besteht und einen Wasserstoffanteil von 1,5 Vol.-% bis zu 2 Vol.-% sowie einen Heliumanteil von 2 Vol.-% bis zu 5 Vol.-% aufweist.

In der EP 0 639 427 A1 wird ein Schutzgasgemisch für das WIG-Schweißen von Metallen beschrieben, das neben Anteilen von Argon, Helium und Wasserstoff auch einen geringen Anteil von zwischen 50 und 1000 ppm von Sauerstoff und/oder Kohlendioxid enthält. Die Dotierung mit Kohlendioxid und/oder Sauerstoff dient dabei der Stabilisierung des Lichtbogens.

Dokument EP0949038 beschreibt ein Schutzgas und ein Verfahren zum WIG-Wechselstromschweißen von Aluminiumwerkstoffen und Aluminiumlegierungen, wobei das Schutzgas der Schweißstelle zugeführt wird und wobei das Schutzgas Argon oder ein Gemisch aus Argon und Helium enthält. Gemäß diesem Dokument werden gute Schweißergebnisse mit einem Schutzgas erzielt, welches neben Argon und gegebenenfalls Helium zumindest einen Anteil von 300 vpm bis 1000 vpm Stickstoff enthält und in welchem der Heliumanteil im Schutzgas weniger als 50 Vol.-% beträgt.

Die bekannten Schutzgasgemische weisen verschiedene Nachteile auf. So ist die Ersetzung von Helium durch Wasserstoff beim WIG-Schweißen von ferritischen Stählen nicht möglich, da dort selbst ein geringer Wasserstoffanteil im Schutzgas zu Rissbildungen im Werkstück führt. Somit war bislang beim WIG-Schweißen von ferritischen Stählen keine Alternative zum Heliumanteil im Schutzgas erkennbar. Weiterhin hat sich gezeigt, dass ein Anteil von Sauerstoff oder Kohlendioxid im Schutzgas bereits ab 500 ppm zu einem Abbrand und einer unerwünschten Kranzbildung auf der Wolframelektrode führt.

Der Erfindung liegt somit die Aufgabe zugrunde, ein vergleichsweise preisgünstiges Schutzgas für das Schweißen von ferritischem Stählen bereitzustellen, bei dem ein mit der Verwendung eines konventionellen Gasgemisches mit höherem Heliumanteil vergleichbares Schweißergebnis erzielt wird und das keinen negativen Einfluss auf die Wolframelektrode zeigt.

Die Aufgabe der Erfindung wird durch die Verwendung eines Schutzgases mit den Merkmalen des Patentanspruchs 1 gelöst. Vorteilhafte Ausgestaltungen der Erfindung werden in den Unteransprüchen beansprucht.

Das Schutzgas das erfindungsgemäß zum WIG-Schweißen ferritischer Stähle verwendet wird, besteht zu einem Anteil von über 99,5 Vol.-%, bevorzugt von über 99,8 Vol.-%, aus Argon oder einem Argon-Helium Gemisch und besitzt Zusätze von Stickstoff (10 bis 2000 ppm) und Kohlendioxid (10 bis 500 ppm).

Es hat sich überraschend gezeigt, dass mit einem vergleichsweise geringen Zusatz von jeweils mindestens 10 ppm, bevorzugt jeweils mindestens 100 ppm, Stickstoff und Kohlendioxid und bis zu 2000 ppm Stickstoff sowie bis zu 500 ppm Kohlendioxid in einem im Übrigen zumindest weitgehend aus Argon oder einem Gemisch aus Argon und Helium bestehenden Schutzgas Schweißergebnisse erzielt werden, die eine ähnliche Qualität, insbesondere ein ähnliches Einbrandverhalten, zeigen, wie bei Verwendung eines reinen Argon-Helium Schweißgasgemisches mit einem um bis zu 50 Vol.-% höherem Heliumanteil.

Im Rahmen der vorliegenden Erfindung wurde zudem der Einfluss von Zusätzen verschiedener Aktivgase (CO₂, O₂, N₂ und H₂) in einem im übrigen aus Argon oder aus einem Argon-Helium-Gemisch bestehenden Schutzgas auf die WIG-Elektrode untersucht. Dabei wurde festgestellt, dass Kohlendioxid oberhalb eines Anteils von 500 ppm zu einem Abbrand und einer Kranzbildung der Elektrode führt. Ein Anteil von über 500 ppm CO₂ wird daher als nachteilig angesehen. Bei einem Zusatz von bis zu 2000 ppm Stickstoff blieb die Elektrode stabil. Sauerstoff führt bereits bei einem Anteil deutlich unterhalb von 500 ppm zu einem Abbrand und einer Kranzbildung der Elektrode. Ein Zusatz von bis zu 1000 ppm Wasserstoff ist für die Elektrode unschädlich, führt jedoch schon bei niedrigeren Konzentrationen zu Schädigungen im ferritischen Werkstück. Anteile von Sauerstoff oder Wasserstoff werden daher im Rahmen der vorliegenden Erfindung als nachteilig angesehen.

Eine besonders vorteilhafte Zusammensetzung des erfindungsgemäßen Schutzgases zum WIG-Schweißen ferritischer Stähle enthält zwischen 500 ppm und 2000 ppm Stickstoff und 100 bis 300 ppm Kohlendioxid, Rest Argon oder ein Helium-Argon-Gemisch.

Darüber hinaus kann das Schweißverhalten durch Zugabe von Helium beeinflusst werden; insbesondere zeigt ein erhöhter Heliumanteil eine weiter vergrößerte Tiefe- und Breite des Einbrands. Jedoch kann der Heliumanteil im erfindungsgemäßen Schutzgas bei gleichen Schweißergebnissen deutlich geringer gewählt werden als bei klassischen Argon-Helium Schutzgasgemischen. Ein für viele Schweißaufgaben ausreichender und bevorzugter Heliumanteil im erfindungsgemäßen Schutzgas ist daher kleiner als 20 Vol.-%, besonders bevorzugt kleiner als 10 Vol.-%. In vielen Fällen kann auf Helium auch völlig verzichtet werden.

Das erfindungsgemäß verwendete Schutzgas enthält außer Argon und gegebenenfalls Helium sowie den Stickstoff- und Kohlendioxiddotierungen keine weiteren Gaskomponenten, es handelt sich also - im Rahmen üblicher Nachweisgrenzen - um ein Drei- bzw. Vierkomponentengemisch.

Die Aufgabe der Erfindung wird zudem durch ein Verfahren zum WIG-Schweißen von ferritischen Stählen gelöst, bei dem während des Schweißens die Schweißstelle von einem Schutzgas umspült wird, das eine der in den Patenansprüchen 1 bis 3 definierten Zusammensetzungen aufweist.

Im Folgenden soll die Wirkung des erfindungsgemäßen Schutzgases anhand von Versuchsergebnissen beispielhaft erläutert werden.

**Tabelle 1** zeigt Versuchsergebnisse beim WIG-Schweißen eines ferritischen Stahls (S 355) unter üblichen, aus Argon und/oder Helium bestehenden Schutzgasen mit verschiedenen Heliumanteilen. Dargestellt sind jeweils Schliffbilder sowie die entsprechenden Werte von Tiefe und Breite des Einbrands.

Die Stromstärke betrug jeweils 100 A, die Schweißgeschwindigkeit 10 cm/min und der Gasdurchfluss 10 l/min. Der Abstand der Elektrode vom Werkstück betrug 2 mm.

Im Verlauf der Versuche wurde der Heliumanteil im Schutzgas schrittweise von 0 auf 100 Vol.-% erhöht. Wie bekannt zeigt sich, dass mit zunehmendem Heliumanteil die Tiefe und Breite des Einbrands zunimmt.

**Tabelle 2** zeigt Versuchsergebnisse beim WIG-Schweißen eines ferritischen Stahls (S 355) unter erfindungsgemäßen Schutzgasen. Gezeigt sind die Ergebnisse mit einem ersten Schutzgas, bestehend aus Argon mit einer Dotierung von 1000 ppm N₂ und 200 ppm CO₂ sowie mit einem zweiten Schutzgas, bestehend aus Argon mit einer Dotierung von 1500 ppm N₂ und 200 ppm CO₂ Auch hier sind jeweils Schliffbilder sowie die entsprechenden Werte von Tiefe und Breite des Einbrands gezeigt.

Die Stromstärke betrug auch hier jeweils 100 A, die Schweißgeschwindigkeit 10 cm/min und der Gasdurchfluss 10 l/min. Der Abstand der Elektrode vom Werkstück betrug 2 mm.

Es zeigt sich, dass die Zugabe von Stickstoff und Kohlendioxid in den angegebenen Mengen zu einer deutlichen Erhöhung von Einbrandtiefe und Einbrandbreite im Vergleich zum Einsatz von reinem Argon als Schutzgas (siehe Tabelle 1) führt. Tiefe und Breite des Einbrands entsprechen dabei ungefähr dem Einbrandverhalten, das mit einem Schutzgas aus 50 Vol.-% Argon und 50 Vol.-% Helium erzielt werden kann. Die Erhöhung des Stickstoffanteils von 1000 ppm auf 1500 ppm führt dagegen nur noch zu einer geringfügigen Verbreiterung und Vertiefung des Einbrands.

Mit dem erfindungsgemäß verwendeten Schutzgas für das WIG-Schweißen ferritischer Stähle kann bei gleichen Schweißergebnissen der Heliumanteil im Schutzgas erheblich reduziert oder sogar völlig auf die Beimischung von Helium verzichtet werden.

**Tabelle 1**

| **Schutzgas** | **Aufnahme des Einbrandquerschnitts** | **Einbrand, gemessen** | |
|---|---|---|---|
| Argon 100% | 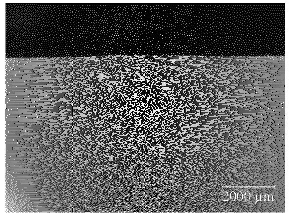 | Einbrand [mm] | |
| | | Tiefe | 1,342 |
| | | Breite | 4,64 |
| | | | |
| Argon 85% | 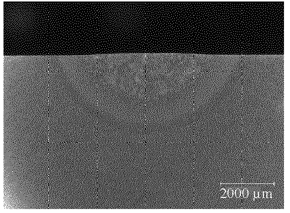 | Einbrand [mm] | |
| Helium 15% | | Tiefe | 1,670 |
| | | Breite | 4,791 |
| | | | |
| Argon 70% | 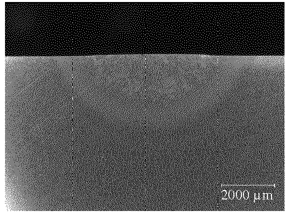 | Einbrand [mm] | |
| Helium 30% | | Tiefe | 1,671 |
| | | Breite | 5,058 |
| | | | |
| Argon 50% | 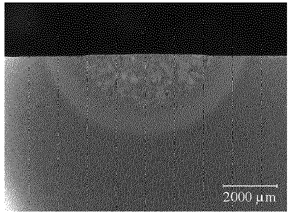 | Einbrand [mm] | |
| Helium 50% | | Tiefe | 1,885 |
| | | Breite | 4,969 |
| | | | |
| Argon 30% | 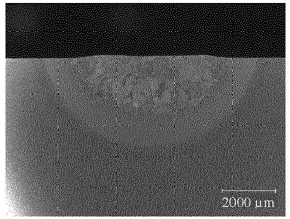 | Einbrand [mm] | |
| Helium 70% | | Tiefe | 2,080 |
| | | Breite | 5,813 |
| | | | |
| Helium 100% | 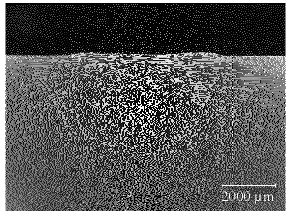 | Einbrand [mm] | |
| | | Tiefe | 2,382 |
| | | Breite | 5,973 |
| | | | |

**Tabelle 2**

| **Schutzgas** | **Aufnahme des Einbrandquerschnitts** | **Einbrand, gemessen** | |
|---|---|---|---|
| Argon Rest | 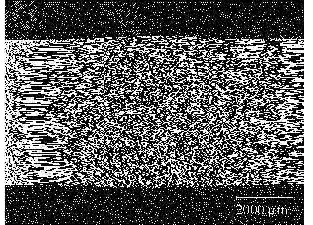 | Einbrand [mm] | |
| Stickstoff:1000ppm | | | |
| CO₂:200ppm | | Tiefe | 1,822 |
| | | Breite | 4,49 |
| | | | |
| Argon Rest | 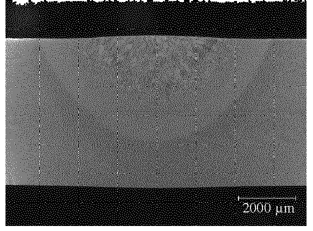 | Einbrand [mm] | |
| Stickstoff: 1500ppm | | | |
| CO₂:200ppm | | Tiefe | 1,858 |
| | | Breite | 4,996 |
| | | | |

## Patentansprüche

1. Verwendung eines Schutzgases zum WIG-Schweißen ferritischer Stähle, wobei das Schutzgas mindestens 99,5 Vol.-% Argon oder einem Argon-Helium-Gemisch enthält,
**dadurch gekennzeichnet,**
**dass** das Schutzgas ein Drei- oder Vierkomponentengemisch ist und neben Argon oder Argon und Helium eine Dotierung von 10 bis 2000 ppm Stickstoff und 10 bis 500 ppm Kohlendioxid enthält.

2. Verwendung nach Anspruch 1, **dadurch gekennzeichnet, dass** das Schutzgas eine Dotierung zwischen 500 ppm und 2000 ppm Stickstoff und 100 bis 300 ppm Kohlendioxid enthält.

3. Verwendung nach Anspruch 1 oder 2, **dadurch gekennzeichnet, dass** das Schutzgas einen Heliumanteil von unter 20 Vol.-%, bevorzugt unter 10 Vol.-% enthält.

4. Verfahren zum WIG-Schweißen von ferritischen Stählen, bei dem während des Schweißvorgangs die Schweißstelle von einem Schutzgas, wie in einem der vorhergehenden Ansprüche definiert, umspült wird.

## Claims

1. Use of a shielding gas for tungsten-inert gas welding of ferritic steels, wherein the shielding gas contains at least 99.5% by volume of argon or an argon-helium mixture,
**characterized in that**
the shielding gas is a three- or four-component mixture and, as well as argon or argon and helium, contains doping of 10 to 2000 ppm of nitrogen and 10 to 500 ppm of carbon dioxide.

2. Use according to Claim 1, **characterized in that** the shielding gas contains doping between 500 ppm and 2000 ppm of nitrogen and 100 to 300 ppm of carbon dioxide.

3. Use according to Claim 1 or 2, **characterized in that** the shielding gas contains a helium content of below 20% by volume, preferably below 10% by volume.

4. Method of tungsten-inert gas welding of ferritic steels, in which, during the welding operation, the weld site is purged by a shielding gas as defined in any of the preceding claims.

## Revendications

1. Utilisation d'un gaz protecteur pour le soudage TIG d'aciers ferritiques, le gaz protecteur contenant au moins 99,5 % en volume d'argon ou d'un mélange argon-hélium, **caractérisée en ce que** le gaz protecteur est un mélange à trois ou quatre composants et contient, outre l'argon ou l'argon et l'hélium, un dopage de 10 à 2 000 ppm d'azote et de 10 à 500 ppm de dioxyde de carbone.

2. Utilisation selon la revendication 1, **caractérisée en ce que** le gaz protecteur contient un dopage compris entre 500 ppm et 2 000 ppm d'azote et de 100 à 300 ppm de dioxyde de carbone.

3. Utilisation selon la revendication 1 ou 2, **caractérisée en ce que** le gaz protecteur contient une proportion en hélium inférieure à 20 % en volume, préférablement inférieure à 10 % en volume.

4. Procédé pour le soudage TIG d'aciers ferritiques, dans lequel, pendant le processus de soudage, la zone de soudage est baignée d'un gaz protecteur tel que défini dans l'une quelconque des revendications précédentes.
